# EUROPÄISCHE PATENTSCHRIFT

(11) **EP 3 789 832 B1**
(45) Veröffentlichungstag und Bekanntmachung des Hinweises auf die Patenterteilung: **08.03.2023**
(21) Anmeldenummer: 20194192.9
(22) Anmeldetag: 02.09.2020
(51) Int. Cl.: G05B 19/042, F16P 3/14

(54) **VORRICHTUNG UND VERFAHREN ZUR AUSFÜHRUNG EINER SICHERHEITSFUNKTION**
DEVICE AND METHOD FOR PERFORMING A SAFETY FUNCTION
DISPOSITIF ET PROCÉDÉ D'EXÉCUTION D'UNE FONCTION DE SÉCURITÉ

(30) Priorität: 03.09.2019 DE 102019123581
(43) Veröffentlichungstag der Anmeldung: 10.03.2021
(73) Patentinhaber: Pilz GmbH & Co. KG, 73760 Ostfildern (DE)
(72) Erfinder: Bakovic, Daniel, 73760 Ostfildern (DE); Pullmann, Jürgen, 73760 Ostfildern (DE); Neuschwander, Bernd, 73760 Ostfildern (DE)
(74) Vertreter: Witte, Weller & Partner Patentanwälte mbB

(56) Entgegenhaltungen:
- DE-A1-102007 031 157
- DE-A1-102010 036 852
- DE-A1-102017 008 638
- DE-U1- 29 520 980

## Beschreibung

Die vorliegende Erfindung betrifft eine Vorrichtung sowie ein Verfahren zur Ausführung einer Sicherheitsfunktion, insbesondere zur Überwachung eines Sicherheitsbereichs einer technischen Anlage.

Eine Sicherheitsfunktion im Sinne der vorliegenden Offenbarung ist eine sicherheitsgerichtete Steuerfunktion einer Maschine, die ein von der Maschine ausgehendes Risiko auf ein akzeptables Maß reduziert. Für Europa ist der Begriff der Sicherheitsfunktion beispielsweise in der Norm DIN EN ISO 13849-1 und DIN EN ISO 12100 definiert.

Vorrichtungen, die eine Sicherheitsfunktion ausführen, arbeiten wie in der Automatisierungstechnik üblich nach einem Eingabe-Verarbeitungs-Ausgabe-Prinzip, wobei zusätzlich zu einer normalen Steuerungstätigkeit eine Fehlersicherheit in allen Prozessschritten gewährleistet sein muss. Die Eingabe umfasst das Erfassen von Zuständen innerhalb eines definierten Arbeitsbereichs mittels geeigneter Sensoren. Die Verarbeitung umfasst die Verknüpfung der erfassten Zustände, die Beurteilung, ob die erfassten Zustände ein die Sicherheitsfunktion auslösendes Ereignis umfassen, sowie das Auslösen einer sicherheitsgerichteten Reaktion, wenn ein solches Ereignis erfasst worden ist. Die Ausgabe umfasst das Ansteuern von Stellgliedern der zu überwachenden Einrichtung oder des zu überwachenden Prozesses und das Ausführen der sicherheitsgerichteten Reaktion, um die Einrichtung oder den Prozess in einen sicheren Zustand zu überführen, wenn ein die Sicherheitsfunktion auslösendes Ereignis erkannt wurde.

Im Fokus der Entwicklung steht die Verwendung von bildgebenden Sensoren als Sensoren für die Eingabe, da diese eine größtmögliche Flexibilität und Anpassungsfähigkeit ermöglichen. Bildgebende Sensoren können vorteilhaft in verschiedenen Einsatzszenarien verwendet werden, und so eine Vielzahl von Anwendungsfällen abdecken. Problematisch bei der Verwendung von bildgebenden Sensoren ist jedoch, diese ausreichend fehlersicher zu machen, so dass sie als Eingabe für eine Sicherheitsfunktion geeignet sind. Es hat sich gezeigt, dass zwar viele Standard-Kamerasysteme (2D und 3D) als bildgebende Sensoren grundsätzlich für den industriellen Einsatz geeignet sind, diese von sich aus jedoch nicht ausreichend fehlersicher sind, um sie für eine sicherheitskritische Anwendung einsetzen zu können. Aus heutiger Sicht ist die Realisierung eines sicheren Kamerasystems, das den Anforderungen der einschlägigen Sicherheitsnorm genügt, nur schwer und unter großem Aufwand möglich. Ein Beispiel für ein sicheres Kamerasystem ist beispielsweise DE 10 245 720 A1 zu entnehmen.

DE 295 20 980 U1 zeigt eine Vorrichtung zum Testen eines lichtempfindlichen Matrix-Sensors, insbesondere einer elektronischen Kamera mit CCD-Matrix-Sensor oder CMOS-Matrix-Sensor.

DE 10 2017 008 638 A1 zeigt ein Sensorsystem, das eingerichtet ist, einen humanzentrischen Roboter, der in der Lage ist, in unmittelbare Nähe eines Menschen zu arbeiten, zu überwachen.

DE 10 2010 036 852 A1 zeigt eine Stereokamera mit einer Beleuchtungseinheit zur Projektion eines strukturierten Beleuchtungsmusters in einen Überwachungsbereich.

DE 10 2007 031 157 A1 zeigt einen optoelektronischen Sensor sowie ein Verfahren zur Erfassung und Abstandsbestimmung eines Objekts für eine dreidimensionale Raumüberwachung.

Vor diesem Hintergrund ist es eine Aufgabe der vorliegenden Erfindung eine Vorrichtung anzugeben, die eine Ausführung einer Sicherheitsfunktion unter Verwendung eines bildgebenden Sensors auf einfachere und kostengünstigere Weise ermöglicht. Insbesondere ist eine Aufgabe eine Vorrichtung zur Ausführung eine Sicherheitsfunktion anzugeben, die auf Standardkomponenten zurückgreifen kann.

Gemäß Aspekten der vorliegenden Erfindung wird diese Aufgabe gelöst durch eine Testeinrichtung, ein System und entsprechende Verfahren gemäß der unabhängigen Ansprüche.

Es ist somit eine Idee der vorliegenden Erfindung eine Testeinrichtung bereitzustellen, welche die Funktionsfähigkeit der bildgebenden Sensoreinheit überprüft. Funktionsfähigkeit bedeutet in diesem Zusammenhang, dass die bildgebende Sensoreinheit bestimmungsgemäß funktioniert und Bilddaten in einer zu erwartenden Weise bereitstellt. Die Testeinrichtung ermöglicht es, eine bildgebende Sensoreinheit einzusetzen, die selbst nicht über fehlersichere Einrichtungen verfügt, um fehlersicher eine Eingabe für die Ausführung einer Sicherheitsfunktion bereitzustellen. Durch die Testeinrichtung kann auf eine aufwendige Absicherung der bildgebenden Sensoreinheit, beispielsweise durch eine redundante Auslegung der wesentlichen Komponenten, verzichtet werden.

Ferner kann bei der Ausgestaltung der bildgebenden Sensoreinheit auf die für Sicherheitssensorik übliche Laufzeittests (RAM-Test, ROM-Test, Abschalttest etc.) verzichtet werden. Vielmehr wird die Funktionsfähigkeit einer oder mehrerer bildgebenden Sensoreinheiten über eine separate Testeinrichtung überprüft. Auf diese Weise ist es möglich, eine Vorrichtung bereitzustellen, die insgesamt eine ausreichende Sicherheit gewährleisten kann, ohne dass jede einzelne Komponente für sich fehlersicher ist. Vorteilhaft werden so nur die Komponenten sicher gemacht, die notwendigerweise sicher sein müssen, während für andere Komponenten Standardkomponenten, die für sich genommen nicht fehlersicher sind, verwendet werden. So kann insgesamt ein kostengünstiges und gleichzeitig fehlersicheres System bereitgestellt werden, welches für die Ausführung einer Sicherheitsfunktion geeignet ist und als Eingabe auf bildgebende Sensoren zurückgreift, die eine flexible Ausgestaltung ermöglichen. Auf diese Weise lässt sich funktionale Sicherheit besonders effizient, flexibel und kostengünstig realisieren.

In einer weiteren Ausgestaltung ist die Steuerung eingerichtet, die sicherheitsgerichtete Reaktion zusätzlich in Abhängigkeit des Vergleichs der spezifischen Eigenschaften mit den definierten Eigenschaften auszuführen.

In dieser Ausgestaltung löst die Steuerung somit die sicherheitsgerichtete Reaktion nicht nur dann aus, wenn ein die Sicherheitsfunktion auslösendes Ereignis detektiert worden ist, sondern auch bei fehlgeschlagener Mustererkennung, da dann von einem nicht ordnungsgemäßen Betrieb der bildgebenden Sensoreinheit auszugehen ist. Auf diese Weise kann eine hohe Sicherheit auch dann gewährleistet werden, wenn die bildgebende Sensoreinheit sowie deren Kopplung an die Steuerung selbst nicht fehlersicher ausgebildet sind. Die Ausgestaltung trägt somit zu einer besonders einfachen Realisierung der Vorrichtung bei.

In einer weiteren Ausgestaltung ist die Steuerung eine Sicherheitssteuerung mit sicherheitsgerichteten Einrichtungen, wobei die Steuerung alleine dazu eingerichtet ist, ein fehlersicheres Ausführen der sicherheitsgerichteten Reaktion zu gewährleisten.

In dieser Ausgestaltung kann somit nur die Steuerung als sichere Einrichtung ausgebildet sein. Die Ausgestaltung hat den Vorteil, dass die bildgebende Sensoreinheit und die Testeinrichtung selbst nicht fehlersicher sein müssen, während die gesamte fehlersichere Auswertung durch die Steuerung als Sicherheitssteuerung (FS-Steuerung) durchgeführt wird. Die sicherheitsgerichteten Einrichtungen können so in einem Geräte konzentriert sein. Dadurch muss auch nur dieses Gerät den Anforderungen einer fehlersicheren Ausgestaltung genügen und eine normgerechte Zertifizierung erhalten. Auf diese Weise lässt sich die Implementierung einer sicheren Anwendung besonders einfach und kostengünstig realisieren.

In einer weiteren Ausgestaltung ist die Testeinrichtung zumindest teilweise in die Sicherheitssteuerung integriert oder als Modul für diese ausgebildet, und zumindest die Verarbeitungseinheit macht von den sicherheitsgerichteten Einrichtungen Gebrauch, um eine Fehlersicherheit der Verarbeitungseinheit zu gewährleisten.

In dieser Ausgestaltung ist die Testeinrichtung somit teilweise in die Sicherheitssteurung integriert. Dies kann beispielsweise in Form von Softwaremodulen erfolgen, die auf der Sicherheitssteuerung ausgeführt werden und bei der Ausführung auf die sicherheitsgerichteten Einrichtungen innerhalb der Sicherheitssteurung zurückgreifen. Beispielsweise kann ein solches Softwaremodul von einer redundanten Auslegung der Prozessoren der Sicherheitssteurung profitieren und seinen eigenen Programmablauf verifizieren. Die Testeinrichtung kann auf diese Weise besonders günstig realisiert werden, da sie auf ohnehin vorhandene Komponenten der Sicherheitssteuerung zurückgreifen kann.

In einer weiteren Ausgestaltung ist die Steuerung dazu eingerichtet, die definierten Eigenschaften des Musters festzulegen.

In dieser Ausgestaltung kann somit die Steuerung das Muster vorgeben und damit verbunden eine Erwartungshaltung an die von der bildgebenden Sensorik gelieferten Bilddaten. Auf diese Weise kann die Sicherheitseinrichtung besonders einfach implementiert werden, wobei die wesentlichen Elemente auf der Steuerung konzentriert sind.

Das Muster ist ein dynamisches Muster, bei dem sich die definierten Eigenschaften über die Zeit kontinuierlich verändern.

Indem sich das Muster kontinuierlich verändert, kann besonders einfach und sicher festgestellt werden, ob die bildgebende Sensorik ordnungsgemäß funktioniert. Insbesondere können die Intervalle, in denen sich das Muster ändert, so gewählt werden, dass eine Gesamtreaktionszeit des Systems in ausreichender Höhe gewährleistet werden kann. Damit kann die Vorrichtung auch für hohe Sicherheitsstufen eingesetzt werden. Die Intervalle sind daher so gewählt, dass diese kleiner oder gleich der Reaktionszeit sind, welche für die Sicherheitsanwendung gefordert ist.

Die definierten Eigenschaften verändern sich in einem ersten Zeitintervall systematisch.

Systematisch heißt in diesem Zusammenhang, dass sich das Muster in einer vorab festgelegten Art und Weise über die Zeit verändert. Dies erleichtert die Implementierung, da durch die vorgegebene Veränderung auch die Erwartungswerte vordefiniert sind. Das systematische Vorgehen hat zudem den Vorteil, dass bestimmte Fehler nicht nur erkannt werden können, sondern ggf. auch deren Fehlerquelle identifiziert werden kann.

Ferner verändern sich die definierten Eigenschaften zumindest in einem zweiten Zeitintervall zufällig.

Eine zufällige Veränderung hat den Vorteil, dass systematische Fehler zuverlässig erkannt werden können. Werden daher systematische und zufällige Veränderungen kombiniert werden ein möglichst breites Spektrum an Fehlern erkannt und deren Ursache identifiziert.

In einer weiteren Ausgestaltung umfassen die definierten Eigenschaften eine Positionsangabe und die Projektionseinheit ist dazu ausgebildet, das Muster in Abhängigkeit der Positionsangabe in den Arbeitsbereich zu projizieren.

Eine Positionsangabe kann auf einfache Weise in ein Muster umgesetzt werden und durch die Verarbeitungseinheit verifiziert werden. Bei der Positionsangabe kann es sich bspw. um eine Raumkoordinate handeln, anderen Position das Muster im Arbeitsbereich erscheinen soll. Die Ausgestaltung trägt zu einer einfachen Implementierung der Vorrichtung bei.

Alternativ ist der Arbeitsbereich in eine Vielzahl definierter Segmente unterteilt und die Projektionseinheit ist dazu ausgebildet, in einer definierten Zeitspanne das Muster mindestens einmal in jedem definierten Segment zu erzeugen.

Durch die Aufteilung in Segmente ist ein Bereich, in dem die Funktionsfähigkeit der bildgebenden Sensoreinheit überprüft werden muss, flexibel einstellbar. Die Überprüfung kann somit auf bestimmte definierte Bereiche eingeschränkt werden, wodurch die Überprüfung der bildgebenden Sensoreinheit vereinfacht wird und sich für verschiedene Szenarien anpassen lässt.

In einer weiteren Ausgestaltung ist der Arbeitsbereich ein dreidimensionaler Arbeitsbereich und das Muster weist als definierte Eigenschaft eine dreidimensionale Charakteristik auf, die von der bildgebenden Sensorik erfassbar ist, und die sich insbesondere zeitkontinuierlich verändert.

In dieser Ausgestaltung kann die Vorrichtung somit auch zur Überwachung eines dreidimensionalen Arbeitsbereichs eingesetzt werden, wobei zur Überprüfung der Funktionsfähigkeit der bildgebenden Sensoreinheit ein Muster mit einer dreidimensionalen Charakteristik herangezogen wird. Die dreidimensionale Charakteristik kann bspw. eine dreidimensionale Raumkoordinate sein. Die Überwachung eines dreidimensionalen Arbeitsbereichs hat den Vorteil, dass die Vorrichtung besonders flexibel auf unterschiedliche Einsatzszenarien eingestellt werden kann.

In einer weiteren Ausgestaltung ist das Muster ein Punktmuster und die Projektionseinheit insbesondere ein Laserprojektor.

Ein Punktmuster lässt sich besonders leicht erzeugen und dessen Auftreten aus den Bilddaten extrahieren. Mittels eines Laserprojektors kann das Punktmuster auf einfache Weise an definierte Stellen im Arbeitsraum projiziert werden. Die Ausgestaltung trägt somit zu einer sehr kostengünstigen Implementierung der Vorrichtung bei.

In einer weiteren Ausgestaltung ist die bildgebende Sensoreinheit eine nicht sichere Kameraeinheit, die eine Fehlersicherheit der Erfassung nicht selbständig gewährleisten kann.

Die Verwendung einer nicht sicheren Kameraeinheit hat den Vorteil, dass auf Standardkameras zurückgegriffen werden kann, wodurch sich die Implementierung der Vorrichtung besonders günstig gestaltet.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Es zeigen:
- Fig. 1: eine schematische Darstellung einer Vorrichtung zur Ausführung einer Sicherheitsfunktion gemäß einem Ausführungsbeispiel der vorliegenden Erfindung,
- Fig. 2: eine schematische Darstellung einer Überwachung eines definierten Arbeitsbereichs durch eine Vorrichtung gemäß einem Ausführungsbeispiel der vorliegenden Erfindung, und
- Fig. 3: ein Flussdiagramm eines Verfahrens zum Ausführen einer Sicherheitsfunktion gemäß einem Ausführungsbeispiel der vorliegenden Erfindung.

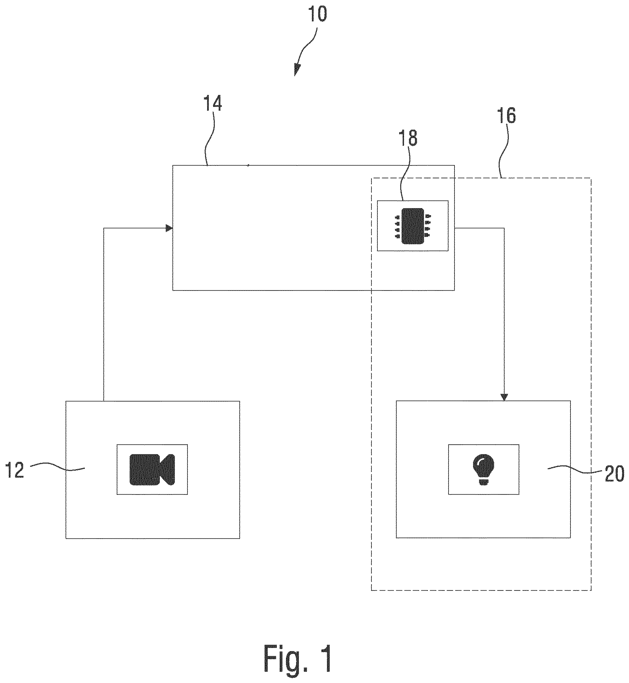

Fig. 1 zeigt in einer schematischen Darstellung eine Vorrichtung zur Ausführung einer Sicherheitsfunktion gemäß einem Ausführungsbeispiel der vorliegenden Erfindung.

Die Vorrichtung ist hier in ihrer Gesamtheit mit der Bezugsziffer 10 bezeichnet und umfasst eine bildgebende Sensoreinheit 12, eine Steuerung 14 sowie eine Testeinrichtung 16. Die Testeinrichtung umfasst eine Verarbeitungseinheit 18 sowie eine Projektionseinheit 20.

Die bildgebende Sensoreinheit 12 ist dazu eingerichtet, einen Überwachungsbereich einer technischen Anlage abzubilden. Insbesondere kann die bildgebende Sensoreinheit 12 eine Videokamera sein, die bewegte Bilder eines definierten Arbeitsbereichs aufnehmen und ggf. speichern kann. Die bildgebende Sensoreinheit 12 kann als eine einzelne Kamera oder als Verbund mehrerer Kameras (Kameranetzwerk) ausgebildet sein. Bei einem Kameranetzwerk können Aufnahmen mehrerer Kameras zu Bilddaten fusioniert werden.

Die Bilddaten, die von der bildgebende Sensoreinheit 12 bereitgestellt werden, können neben zweidimensionalen Informationen zusätzliche Informationen umfassen. Insbesondere können die Bilddaten Informationen umfassen, aus denen sich dreidimensionale Informationen über den abgebildeten Arbeitsbereich ableiten lassen. Dreidimensionale Informationen können von bestimmten Kameratypen (bspw. Time-of-Flight-Kameras) direkt bereitgestellt werden bzw. aus verschiedenen Aufnahmen durch geeignete Bildverarbeitung errechnet werden.

Die bildgebende Sensoreinheit 12 kann insbesondere eine Standardkamera sein. Unter dem Begriff der "Standardkamera" wird hier eine Kamera verstanden, die neben den aufzeichnungstechnischen Einrichtungen keine sicherheitsgerichteten Einrichtungen aufweist. Als sicherheitsgerichtete Einrichtung werden vorliegend solche Einrichtungen angesehen, die dazu dienen, sicherheitsgerichtete Aktionen fehlerfrei auszuführen bzw. zu überwachen und bei Vorliegen eines Fehlers zuverlässig eine definierte Aktion auszuführen. Mit anderen Worten eine Standardkamera im Sinne der vorliegenden Erfindung ist eine Kamera, deren Daten nicht unmittelbar zum selbstständigen Ausführen einer Sicherheitsfunktion herangezogen werden können. Eine Standardkamera kann somit ihren ordnungsgemäßen Betrieb nicht im Sinne der einschlägigen Sicherheitsnormen überprüfen und garantieren.

Die bildgebende Sensoreinheit 12 ist mit einer Steuerung 14 verbunden. Die Steuerung 14 kann eine beliebige Steuerung sein, die zielgerichtet ein technisches System beeinflusst. Insbesondere kann die Steuerung 14 eine Sicherheitssteuerung (FS-Steuerung) sein, die dazu eingerichtet ist, eine Steuerungsaufgabe fehlersicher durchzuführen.

Eine Sicherheitssteuerung ist dazu eingerichtet, eine Sicherheitsfunktion im Sinne der Normen DIN EN ISO 13849-1 und DIN EN ISO 12100 zu realisieren. Unter dem Begriff der Sicherheitsfunktion versteht man demnach eine sicherheitsgerichtete Steuerungsfunktion einer Maschine, die ein von der Maschine ausgehendes Risiko auf ein akzeptables Maß reduziert. Die konkrete Definition der Sicherheitsfunktion für eine technische Anlage unterliegt dabei einer individuellen Betrachtung der zu überwachenden technischen Anlage.

Die Sicherheitssteuerung gewährleistet während des Betriebs der technischen Anlage die ordnungsgemäße Ausführung der Sicherheitsfunktion. Im Falle, dass die Sicherheitsfunktion nicht gewährleistet werden kann, überführt die Sicherheitssteuerung die technische Anlage in einen sicheren Zustand, insbesondere indem die Sicherheitssteuerung die technische Anlage abschaltet. Eine Sicherheitssteuerung kann als einfache Schalteinrichtung, als modulare Kombination einzelner Schalteinrichtungen, als konfigurierbare Steuerung oder als speicherprogrammierbare Steuerung (SPS) realisiert sein. Wenn im Folgenden Bezug auf eine Steuerung genommen wird ist eine Sicherheitssteuerung im vorstehenden Sinne gemeint.

Üblicherweise arbeitet eine Steuerung nach einem Eingabe-Verarbeitungs-Ausgabe-Prinzip. Die Steuerung nimmt über ein oder mehrere Sensoren ein Eingangssignal auf (Eingabe), wertet dieses aus (Verarbeitung) und steuert über definierte Ausgänge die technische Anlage an (Ausgabe). Eine Sicherheitssteuerung verfügt dabei insbesondere über sichere Ausgänge, die ein Betrieb der technischen Anlage nur dann zulassen, wenn ein entsprechendes Eingangssignal anliegt und von der Steuerung 14 das entsprechende Ausgangssignal bereitgestellt wird.

Es versteht sich, dass in diesem Fall neben der Sicherheitssteuerung und den sicheren Ausgängen auch die Sensorik so ausgelegt sein muss, dass diese nur dann belastbare Werte liefert, wenn diese ordnungsgemäß funktionieren. Das heißt es muss sichergestellt sein, dass die Sensoren das Eingangssignal nur dann liefern, wenn diese und deren Kommunikationsschnittstelle zur Steuerung ordnungsgemäß funktionieren. Im Falle von bildgebenden Sensoren ist eine derartige Absicherung aus heutiger Sicht aufwändig und teuer, so dass nur wenige tatsächlich sichere Kamerasysteme als sichere Sensorik auf dem Markt existieren.

Die Kombination einer Standardkamera mit einer Sicherheitssteuerung kann aus den erwähnten Gründen keine ausreichende Sicherheit gewährleisten, so dass eine Vorrichtung gemäß der vorliegenden Erfindung neben der Standardkamera und der Steuerung über eine Testeinrichtung 16 verfügt, mit welcher die Funktionsfähigkeit der Standardkamera überprüft werden kann. Mit anderen Worten die Testeinrichtung 16 ist dazu eingerichtet den ordnungsgemäßen Betrieb der bildgebenden Sensoreinheit 12 im Sinne der einschlägigen Sicherheitsnormen zu gewährleisten.

Die Testeinrichtung 16 umfasst eine Verarbeitungseinheit 18 sowie eine Projektionseinheit 20, die eine funktionale Einheit bilden können und auf verschiedene Weise realisierbar sind.

Im Ausführungsbeispiel gemäß in Fig. 1 ist die Verarbeitungseinheit 18 ein Teil der Steuerung 14. Insbesondere kann die Verarbeitungseinheit 18 als ein Hardware- und/oder Softwaremodul der Steuerung 14 ausgebildet oder in diese integriert sein. Bei einer Sicherheitssteuerung kann die Verarbeitungseinheit 18 insbesondere auf die sicherheitsgerichteten Einrichtungen der Sicherheitssteuerung zurückgreifen. Auf diese Weise kann die Testeinrichtung kostengünstig realisiert werden, da auf Komponenten der ohnehin vorhandenen Sicherheitssteuerung zurückgegriffen werden kann. Alternativ kann die Verarbeitungseinheit 18 auch alleine oder in Kombination mit der Projektionseinheit 20 als selbstständige Einheit ausgebildet sein, die in einem eigenen Gehäuse räumlich getrennt von der Steuerung 14 angeordnet ist. Auf diese Weise kann die Testeinrichtung bspw. einfach bei bestehenden Systemen nachgerüstet werden.

Unabhängig von ihrer Ausgestaltung ist die Verarbeitungseinheit 18 dazu eingerichtet, die Projektionseinheit 20 anzusteuern und Bilddaten der bildgebenden Sensoreinheit 12 auszuwerten. Die Projektionseinheit 20 ist ein Gerät, welches in der Lage ist, an bestimmte Stellen im Arbeitsbereich Muster zu projizieren. Die Projektionseinheit 20 kann bspw. ein Laser-, Video- oder Hologrammprojektor sein.

Die Projektionseinheit 20 kann insbesondere ein Muster mit definierten Eigenschaften in den Arbeitsbereich projiziert, welche von der bildgebenden Sensoreinheit 12 erfassbar sind. Erfassbar heißt in diesem Zusammenhang, dass die definierten Eigenschaften aus den aufgezeichneten Bilddaten der bildgebenden Sensoreinheit 12 von der Verarbeitungseinheit 18 extrahiert werden können.

Das Muster kann ein dynamisches Muster sein, bei dem sich die definierten Eigenschaften über die Zeit kontinuierlich verändern. Die definierten Eigenschaften können durch das Muster selbst oder durch die Art der Projektion bestimmt sein. Beispielsweise können die definierten Eigenschaften eine Form oder eine Intensität des Musters sein. Alternativ oder ergänzend können die definierten Eigenschaften auch durch eine Position in Arbeitsbereich, in welche das Muster projiziert wird, bestimmt sein. Ferner kann das projizierte Muster in einem für den Menschen nicht sichtbaren Spektrum projiziert werden, solange das Muster von der bildgebenden Einheit 12 erfassbar ist. Ferner kann das Muster nicht kontinuierlich angezeigt werden, sondern in einem anderen Ausführungsbeispiel wiederkehrend in definierten Intervallen.

Die Verarbeitungseinheit 18 ist ferner eingerichtet, Bilddaten von der bildgebenden Sensoreinheit 12 zu erhalten und zu verarbeiten. insbesondere kann die Verarbeitungseinheit 18 aus den Bilddaten das projizierte Muster extrahieren und dessen spezifische Eigenschaften bestimmen. Sofern diese extrahierten spezifischen Eigenschaften mit einer Erwartungshaltung übereinstimmen, kann auf die ordnungsgemäße Funktion der bildgebenden Sensoreinheit 12 geschlossen werden. Sollte die Verarbeitungseinheit 18 hingegen nicht in der Lage sein, das projizierte Muster aus den Bilddaten zu extrahieren bzw. wenn die spezifischen Eigenschaften von den definierten Eigenschaften einer bestimmten Erwartungshaltung abweichen, kann auf einen Fehler der bildgebenden Sensorik geschlossen werden. Als Reaktion kann dann die Steuerung veranlassen, dass die technische Anlage in einen sicheren Zustand übergeht. Insbesondere kann eine Sicherheitssteuerung so eingerichtet sein, ein Ausgangssignal für sichere Ausgänge nur dann bereitzustellen, wenn die Verarbeitungseinheit 18 kontinuierlich die Funktionsfähigkeit der bildgebenden Sensoreinheit 12 signalisiert. Auf diese Weise kann eine Sicherheitsfunktion auch mit Hilfe einer Standardkamera realisiert werden.

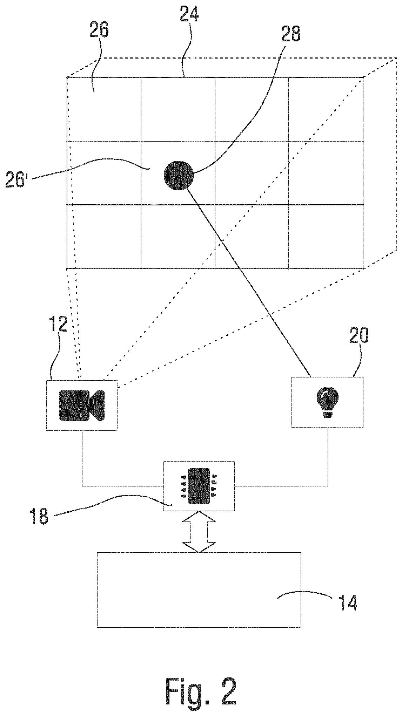

Fig. 2 zeigt exemplarisch die Überwachung eines definierten Arbeitsbereichs mit einer Vorrichtung gemäß einem Ausführungsbeispiel der vorliegenden Erfindung. Der Arbeitsbereich kann bspw. ein Sicherheitsbereich einer technischen Anlage (hier nicht dargestellt) sein, innerhalb dessen während des Betriebs der technischen Anlage eine Gefahr für eine Person oder einen Gegenstand ausgehen kann. In einem solchen Szenario kann die Sicherheitsfunktion das Stillsetzen der technischen Anlage beinhalten, falls ein Eindringen in den Arbeitsbereich detektiert wird.

Das Eindringen wird im vorliegenden Ausführungsbeispiel durch die bildgebende Sensoreinheit 12 erfasst. Sobald die Steuerung eine Abweichung des durch die bildgebende Sensoreinheit 12 aufgenommenen Bilds von einem definierten Referenzbild erfasst, überführt die Steuerung 14 die technische Anlage in einen sicheren Zustand.

Der bildgebende Sensor 12 kann, wie in Fig. 2 angedeutet, den Gefahrenbereich als zweidimensionale Aufnahme abbilden. Ein Vergleich einer Aufnahme der bildgebenden Sensoreinheit 12 mit einem Referenzbild kann dann pixelweise durchgeführt werden. Weicht eine definierte Anzahl von Pixeln von dem Referenzbild ab, kann darauf geschlossen werden, dass sich ein Zustand im Arbeitsbereich verändert hat, bspw. dass eine Person den Arbeitsbereich betreten hat. Die Zustandsänderung kann als auslösendes Ereignis fungieren und die Sicherheitsfunktion auslösen.

Es versteht sich, dass dieser relativ einfache Vergleich nur eine Möglichkeit darstellt, die Bilddaten einer bildgebenden Sensoreinheit 12 auszuwerten. Abhängig von der Art und Umfang der Bilddaten sind komplexere Auswertungen denkbar, um einen definierten Zustand in dem Arbeitsbereich zu erfassen und zu überwachen. So kann bspw. in einem anderen Ausführungsbeispiel ein dreidimensionaler Bereich durch die bildgebende Sensoreinheit 12 überwacht werden (hier gestrichelt angedeutet), indem Bilddaten mit dreidimensionalen Informationen aufgenommen und ausgewertet werden.

Die Testeinrichtung 16 kann unabhängig von der Art der Zustandsüberwachung eingerichtet sein, um die Funktionsfähigkeit der bildgebenden Sensoreinheit 12 zu überprüfen.

Im vorliegenden Ausführungsbeispiel ist der Arbeitsbereich 24 beispielsweise in eine Vielzahl einzelner Segmente 26 unterteilt. Zum Testen der Funktionsfähigkeit wird die Projektionseinheit 20 von der Verarbeitungseinheit 18 angewiesen, ein Muster 28 in ein bestimmtes Segment 26 im Arbeitsbereich 24 zu projizieren. Das Muster 28 ist hier ein Punktmuster, welches beispielhaft in Segment 26' projiziert ist.

Während die Verarbeitungseinheit 18 die Projektionseinheit 20 anweist, das Muster zu projizieren, nimmt die Verarbeitungseinheit 18 die Bilddaten der bildgebenden Sensoreinheit 12 entgegen und wertet diese aus. Durch geeignete Bildverarbeitung kann die Verarbeitungseinheit 18 das Muster 28 aus den Aufnahmen der bildgebenden Sensoreinheit 12 extrahieren und bestimmen, in welchem Segment 26 des Arbeitsbereichs 24 das Muster 28 erfasst worden ist. Stimmt das von der Verarbeitungseinheit 18 bestimmte Segment 26 mit dem Segment überein, in das die Projektionseinheit 20 angewiesen worden ist, das Muster 28 zu projizieren, so kann von einer ordnungsgemäßen Funktion der bildgebenden Sensoreinheit 12 ausgegangen werden. Stimmen die Positionen nicht überein oder kann das Muster nicht aus den Bilddaten extrahiert werden, kann auf ein Fehlverhalten der bildgebenden Sensoreinheit 12 oder deren Kopplung zur Steuerung 14 geschlossen werden.

Sowohl das Anweisen, in welches Segment 26 das Muster zu projizieren ist, als auch die Auswertung, ob das erfasste Muster in diesem Segment ist, kann durch die Sicherheitssteuerung 14 selbst erfolgen. Mit anderen Worten die Verarbeitungseinheit 18 kann vollständig in eine Sicherheitssteuerung integriert sein. Es ist daher nicht nötig, dass die bildgebende Sensoreinheit 12, die Verarbeitungseinheit 18 oder die Projektionseinheit 20 für sich genommen fehlersichere Einrichtungen aufweisen, solange das Anweisen und Auswerten von einen fehlersicheren Einrichtung vorgenommen wird.

Sollte eine Komponente nicht zuverlässig arbeiten, so würde spätestens in einem weiteren Zyklus, in dem die Sicherheitssteuerung die Projektionseinheit 20 anweist ein Muster in ein anderes Segment zu projizieren, ein Fehler erzeugt werden, da das projizierte Muster und die Erwartungshaltung nicht übereinstimmen. Wenn bspw. die Projektionseinheit 20, trotz Anweisung, das Muster 28 in ein anderes Segment 26 zu projizieren, weiterhin das Muster im gegenwärtigen Segment 26 anzeigen sollte, so würde das durch die bildgebende Sensoreinheit 12 erfasste Muster nicht mit dem Erwartungswert der Sicherheitssteuerung übereinstimmen, so dass diese den sicheren Zustand herbeiführen kann. Auf diese Weise können kostengünstige Standardkomponenten sowohl für die bildgebende Sensoreinheit 12 als auch für die Testeinrichtung 16, insbesondere die Projektionseinheit 20, verwendet werden, wodurch sich das System kostengünstig realisieren lässt.

Die Projektion des Musters 28 in den Arbeitsbereich 24 kann systematisch oder zufällig erfolgen, wobei durch eine systematische Projektion andere Fehler detektiert werden können als durch eine zufällige Projektion. Denkbar ist daher in einem bevorzugten Ausführungsbeispiel, in einem ersten Intervall ein Muster 28 systematisch in den Arbeitsbereich 24 zu projizieren und in einem zweiten Intervall zufällig. Auf diese Weise können eine Vielzahl von möglichen Fehlern zuverlässig ausgeschlossen und ggf. deren Ursache eindeutig identifiziert werden.

Es versteht sich, dass der Arbeitsbereich 24 nicht auf einen zweidimensionalen Arbeitsbereich, wie hier gezeigt, beschränkt ist. Denkbar ist auch die Erfassung eines dreidimensionalen Arbeitsbereichs, wobei die definierte Eigenschaft des projizierten Musters eine dreidimensionale Charakteristik aufweist. Die dreidimensionale Charakteristik kann bspw. eine dreidimensionale Raumkoordinate sein. Auf diese Weise können auch komplexe Arbeitsbereiche zuverlässig und fehlersicher durch Standardkomponenten im Zusammenspiel mit einer Sicherheitssteuerung überwacht werden.

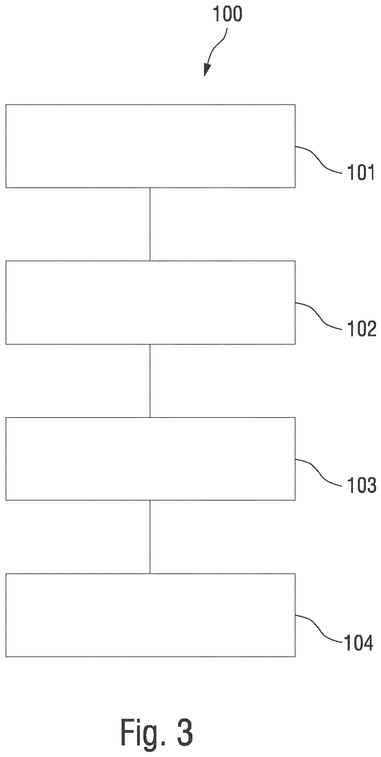

Fig. 3 zeigt in einem Flussdiagramm ein Verfahren zum Ausführen einer Sicherheitsfunktion gemäß einem Ausführungsbeispiel der vorliegenden Erfindung.

Das Verfahren ist in seiner Gesamtheit mit der Bezugsziffer 100 bezeichnet. Ein erster Schritt 101 umfasst das Bereitstellen einer bildgebenden Sensoreinheit, einer Steuerung sowie einer Testeinrichtung mit Projektionseinheit und Verarbeitungseinheit.

In einem zweiten Schritt 102 projiziert die Projektionseinheit ein Muster mit definierten Eigenschaften in einen Arbeitsbereich.

Anschließend (Schritt 103) wertet die Verarbeitungseinheit die von der bildgebenden Sensoreinheit erfassten Bilddaten aus, erfasst das projizierte Muster 28 und extrahiert dessen spezifische Eigenschaften.

Zum Schluss in Schritt 104 vergleicht die Verarbeitungseinheit die spezifischen Eigenschaften des erfassten, projizierten Musters mit den definierten Eigenschaften und löst ein sicherheitsgerichtete Reaktion aus, wenn die spezifischen Eigenschaften des erfassten Musters nicht mit den definierten Eigenschaften übereinstimmen bzw. das Muster gar nicht erfasst werden konnte.

Es versteht sich, dass das Verfahren, wie in Fig. 3 dargestellt, nur die grundsätzlichen Schritte wiedergibt, um das relevante Verfahren, nämlich das Überprüfen der Funktion der bildgebenden Sensorik, auszuführen. Darüber hinaus sind weitere Schritte denkbar, die ausgeführt werden, um die Sicherheitsfunktion insgesamt auszuführen. Ebenso ist es ersichtlich, dass die Schritte des Projizierens, des Erfassens und des Vergleichens kontinuierlich oder in definierten Intervallen wiederholt ausgeführt werden, um die Sicherheitsfunktion während des Betriebs der zu überwachenden Anlage zu gewährleisten. Ferner ist es denkbar, dass ein zusätzlicher Kalibrierschritt einmalig oder regelmäßig ausgeführt wird, um die bildgebende Sensoreinheit 12 auf die Testeinrichtung 16 abzustimmen oder umgekehrt.

Insgesamt ist die vorliegende Erfindung nicht durch die hier dargestellten Ausführungsbeispiele beschränkt, sondern durch die nachfolgenden Patentansprüche definiert.

## Patentansprüche

1. Testeinrichtung (16) zur Überprüfung der Funktionsfähigkeit einer bildgebenden Sensoreinheit (12), umfassend:
eine Verarbeitungseinheit (18); und
eine Projektionseinheit (20),
wobei die Projektionseinheit (20) eingerichtet ist, ein Muster (28) mit definierten Eigenschaften in einen Arbeitsbereich (24) zu projizieren, und
wobei die Verarbeitungseinheit (18) dazu eingerichtet ist, von der bildgebenden Sensoreinheit (12) erfasste Bilddaten auszuwerten, das projizierte Muster in den Bilddaten zu erfassen und dessen spezifische Eigenschaften zu extrahieren sowie die spezifischen Eigenschaften des erfassten projizierten Musters mit den definierten Eigenschaften zu vergleichen,
**dadurch gekennzeichnet, dass**
das Muster (28) ein dynamisches Muster ist, bei dem sich die definierten Eigenschaften über die Zeit kontinuierlich so verändern, dass sich die definierten Eigenschaften in einem ersten Zeitintervall systematisch und in einem zweiten Zeitintervall zufällig verändern.

2. Testeinrichtung (16) zur Überprüfung der Funktionsfähigkeit einer bildgebenden Sensoreinheit (12), umfassend:
eine Verarbeitungseinheit (18); und
eine Projektionseinheit (20),
wobei die Projektionseinheit (20) eingerichtet ist, ein Muster (28) mit definierten Eigenschaften in einen Arbeitsbereich (24) zu projizieren, und
wobei die Verarbeitungseinheit (18) dazu eingerichtet ist, von der bildgebenden Sensoreinheit (12) erfasste Bilddaten auszuwerten, das projizierte Muster in den Bilddaten zu erfassen und dessen spezifische Eigenschaften zu extrahieren sowie die spezifischen Eigenschaften des erfassten projizierten Musters mit den definierten Eigenschaften zu vergleichen,
**dadurch gekennzeichnet, dass**
der Arbeitsbereich (24) in eine Vielzahl definierter Segmente unterteilt ist, und die Projektionseinheit (20) dazu ausgebildet ist, in einer definierten Zeitspanne das Muster mindestens einmal in jedem definierten Segment zu erzeugen.

3. Testeinrichtung nach Anspruch 1 oder 2, wobei die Verarbeitungseinheit (18) eingerichtet ist, die spezifischen Eigenschaften des erfassten projizierten Musters an eine Steuerung (14) weiterzuleiten.

4. System (10) zur Ausführung einer Sicherheitsfunktion, insbesondere zur Überwachung eines Sicherheitsbereichs einer technischen Anlage, umfassend:
eine bildgebende Sensoreinheit (12) zur Erfassung eines die Sicherheitsfunktion auslösenden Ereignisses innerhalb eines definierten Arbeitsbereichs (24),
eine Steuerung (14) zur Ausführung einer sicherheitsgerichteten Reaktion in Abhängigkeit des auslösenden Ereignisses, sowie
eine Testeinrichtung (16) nach einem der Ansprüche 1 bis 3.

5. System nach Anspruch 4, wobei die Steuerung (14) eingerichtet ist, die sicherheitsgerichtete Reaktion zusätzlich in Abhängigkeit des Vergleichs der spezifischen Eigenschaften mit den definierten Eigenschaften auszuführen.

6. System nach einem der Ansprüche 4 oder 5, wobei die Steuerung (14) eine Sicherheitssteuerung mit sicherheitsgerichteten Einrichtungen ist und alleine eingerichtet ist, ein fehlersicheres Ausführen der sicherheitsgerichteten Reaktion zu gewährleisten.

7. System nach Anspruch 6, wobei die Testeinrichtung (16) zumindest teilweise in die Sicherheitssteuerung integriert ist oder als Modul für diese ausgebildet ist, und zumindest die Verarbeitungseinheit (18) von den sicherheitsgerichteten Einrichtungen Gebrauch macht, um eine Fehlersicherheit der Verarbeitungseinheit (18) zu gewährleisten.

8. System nach einem der Ansprüche 4 bis 7, wobei die Steuerung (14) dazu eingerichtet ist, die definierten Eigenschaften des Musters (28) festzulegen.

9. System oder Testeinrichtung nach einem der Ansprüche 1 bis 8, wobei die definierten Eigenschaften eine Positionsangabe umfassen und die Projektionseinheit (20) dazu ausgebildet ist, das Muster (28) in Abhängigkeit der Positionsangabe in den Arbeitsbereich (24) zu projizieren.

10. System oder Testeinrichtung nach einem der Ansprüche 1 bis 9, wobei der Arbeitsbereich (24) ein dreidimensionaler Arbeitsbereich ist und das Muster (28) als definierte Eigenschaft eine dreidimensionale Charakteristik aufweist, die von der bildgebenden Sensoreinheit (12) erfassbar ist.

11. System oder Testeinrichtung nach Anspruch 10, wobei sich die dreidimensionale Charakteristik zeitkontinuierlich verändert.

12. System oder Testeinrichtung nach einem der Ansprüche 1 bis 11, wobei das Muster (28) ein Punktmuster ist und die Projektionseinheit insbesondere ein Laserprojektor.

13. System oder Testeinrichtung nach einem der Ansprüche 1 bis 12, wobei die bildgebende Sensoreinheit (12) eine nicht-sichere Kameraeinheit ist, die eine Fehlersicherheit der Erfassung nicht selbstständig gewährleisten kann.

14. Verfahren (100) zum Ausführen einer Sicherheitsfunktion, insbesondere zur Überwachung eines Sicherheitsbereichs einer technischen Anlage, umfassend:
- Bereitstellen einer bildgebenden Sensoreinheit (12) zur Erfassung eines Ereignisses, welches die Sicherheitsfunktion auslöst, innerhalb eines definierten Arbeitsbereichs (24),
- Bereitstellen einer Steuerung (14) zur Ausführung einer sicherheitsgerichteten Reaktion in Abhängigkeit des auslösenden Ereignisses, sowie
- Bereitstellen einer Testeinrichtung (16), die eine Verarbeitungseinheit (18) und eine Projektionseinheit (20) umfasst, zur Überprüfung der Funktionsfähigkeit der bildgebenden Sensoreinheit (12),
wobei die Projektionseinheit (20) ein Muster (28) mit definierten Eigenschaften in den Arbeitsbereich (24) projiziert, und wobei die Verarbeitungseinheit (18) von der bildgebenden Sensoreinheit (12) erfasste Bilddaten auswertet, das projizierte Muster in den Bilddaten erfasst und dessen spezifische Eigenschaften extrahiert sowie die spezifischen Eigenschaften des erfassten projizierten Musters mit den definierten Eigenschaften vergleicht,
**dadurch gekennzeichnet, dass**
das Muster (28) ein dynamisches Muster ist, bei dem sich die definierten Eigenschaften über die Zeit kontinuierlich so verändern, dass sich die definierten Eigenschaften in einem ersten Zeitintervall systematisch und in einem zweiten Zeitintervall zufällig verändern.

15. Verfahren (100) zum Ausführen einer Sicherheitsfunktion, insbesondere zur Überwachung eines Sicherheitsbereichs einer technischen Anlage, umfassend:
- Bereitstellen einer bildgebenden Sensoreinheit (12) zur Erfassung eines Ereignisses, welches die Sicherheitsfunktion auslöst, innerhalb eines definierten Arbeitsbereichs (24),
- Bereitstellen einer Steuerung (14) zur Ausführung einer sicherheitsgerichteten Reaktion in Abhängigkeit des auslösenden Ereignisses, sowie
- Bereitstellen einer Testeinrichtung (16), die eine Verarbeitungseinheit (18) und eine Projektionseinheit (20) umfasst, zur Überprüfung der Funktionsfähigkeit der bildgebenden Sensoreinheit (12),
wobei die Projektionseinheit (20) ein Muster (28) mit definierten Eigenschaften in den Arbeitsbereich (24) projiziert, wobei die Verarbeitungseinheit (18) von der bildgebenden Sensoreinheit (12) erfasste Bilddaten auswertet, das projizierte Muster in den Bilddaten erfasst und dessen spezifische Eigenschaften extrahiert sowie die spezifischen Eigenschaften des erfassten projizierten Musters mit den definierten Eigenschaften vergleicht,
**dadurch gekennzeichnet, dass**
der Arbeitsbereich (24) in eine Vielzahl definierter Segmente unterteilt ist, und die Projektionseinheit (20) dazu ausgebildet ist, in einer definierten Zeitspanne das Muster mindestens einmal in jedem definierten Segment zu erzeugen.

## Claims

1. A test device (16) for verifying the operability of an imaging unit (12), comprising:
a processing unit (18); and
a projection unit (20),
wherein the projection unit (20) is configured to project a pattern (28) with defined properties into a working area (24), and
wherein the processing unit (18) is configured to evaluate image data acquired by the imaging unit (12), detect the projected pattern within the image data, extract its specific properties, and compare the specific properties of the detected projected pattern with the defined properties,
**characterized in that**
the pattern (28) is a dynamic pattern in which the defined properties change continuously over time such that the defined properties change systematically at least in a first time interval and randomly at least in a second time interval.

2. A test device (16) for verifying the operability of an imaging unit (12), comprising:
a processing unit (18); and
a projection unit (20),
wherein the projection unit (20) is configured to project a pattern (28) with defined properties into a working area (24), and
wherein the processing unit (18) is configured to evaluate image data acquired by the imaging unit (12), detect the projected pattern within the image data, extract its specific properties, and compare the specific properties of the detected projected pattern with the defined properties,
**characterized in that**
the working area (24) is divided into a plurality of defined segments, and the projection unit (20) is configured to generate the pattern at least once in each defined segment in a defined period of time.

3. The test device according to claim 1 or 2, wherein the processing unit (18) is configured to forward the specific properties of the detected projected pattern to a controller (14).

4. System (10) for carrying out a safety function, in particular for monitoring a safety area of a technical installation, comprising:
an imaging unit (12) for acquisition of an event that triggers the safety function within a defined working area (24),
a controller (14) for carrying out a safety-related reaction depending on the triggering event, and
a test device (16) according to any one of claims 1 to 3.

5. The system according to claim 4, wherein the controller (14) is configured to carry out the safety-related reaction additionally based on the comparison of the specific properties with the defined properties.

6. The system according to claim 4 or 5, wherein the controller (14) is a safety controller with safety-related set-up, and wherein solely the safety controller is configured to ensure fail-safe execution of the safety-related reaction.

7. The system according to claim 6, wherein the test device (16) is at least partially integrated into the safety controller or configured as a module for the safety controller, and at least the processing unit (18) makes use of the safety-related set-up to ensure that the processing unit (18) is fail-safe.

8. The system according to any one of claims 4 to 7, wherein the controller (14) is configured to set the defined properties of the pattern (28).

9. The system or the test device according to any one of claims 1 to 8, wherein the defined properties comprise positional information and the projection unit (20) is configured to project the pattern (28) into the working area (24) according to the positional information.

10. The system or the test device according to any one of claims 1 to 9, wherein the working area (24) is a three-dimensional working space and the pattern (28) has a three-dimensional characteristic as a defined property that is detectable by the imaging unit (12).

11. The system or the test device according to claim 10, wherein the three-dimensional characteristic changes continuously over time.

12. The system or the test device according to any one of claims 1 to 11, wherein the pattern (28) is a dot pattern and the projection unit is in particular a laser projector.

13. The system or the test device according to any one of claims 1 to 12, wherein the imaging unit (12) is a non-safe camera unit that is unable to ensure a fail-safe detection autonomously.

14. A method (100) for carrying out a safety function, in particular for monitoring a safety area of a technical installation, comprising:
- Providing an imaging unit (12) for detecting an event which triggers the safety function within a defined working area (24),
- Providing a controller (14) for carrying out a safety-related reaction based on the triggering event, and
- Providing a test device (16) comprising a processing unit (18) and a projection unit (20) for verifying the operability of the imaging unit (12),
wherein the projection unit (20) projects a pattern (28) with defined properties into the working area (24), and wherein the processing unit (18) evaluates image data acquired by the imaging unit (12), detects the projected pattern within the image data, extracts its specific properties, and compares the specific properties of the acquired projected pattern with the defined properties,
**characterized in that**
the pattern (28) is a dynamic pattern in which the defined properties change continuously over time such that the defined properties change systematically at least in a first time interval and randomly at least in a second time interval.

15. A method (100) for carrying out a safety function, in particular for monitoring a safety area of a technical installation, comprising:
- Providing an imaging unit (12) for detecting an event which triggers the safety function within a defined working area (24),
- Providing a controller (14) for carrying out a safety-related reaction based on the triggering event, and
- Providing a test device (16) comprising a processing unit (18) and a projection unit (20) for verifying the operability of the imaging unit (12),
wherein the projection unit (20) projects a pattern (28) with defined properties into the working area (24), and wherein the processing unit (18) evaluates image data acquired by the imaging unit (12), detects the projected pattern within the image data, extracts its specific properties, and compares the specific properties of the acquired projected pattern with the defined properties,
**characterized in that**
the working area (24) is divided into a plurality of defined segments, and the projection unit (20) is configured to generate the pattern at least once in each defined segment in a defined period of time.

## Revendications

1. Dispositif de test (16) destiné à vérifier la fonctionnalité d'une unité de détection et d'imagerie (12), ledit dispositif de test comprenant :
une unité de traitement (18) ; et
une unité de projection (20),
l'unité de projection (20) étant conçue pour projeter un motif (28) ayant des propriétés définies dans une zone de travail (24), et
l'unité de traitement (18) étant conçue pour évaluer les données d'image, acquises par l'unité de détection et d'imagerie (12), détecter le motif projeté dans les données d'image et extraire les propriétés spécifiques de celui-ci et comparer les propriétés spécifiques du motif projeté détecté aux propriétés définies,
**caractérisé en ce que**
le motif (28) est un motif dynamique dans lequel les propriétés définies changent de manière continue dans le temps de sorte que les propriétés définies changent de manière systématique dans un premier intervalle de temps et de manière aléatoire dans un deuxième intervalle de temps.

2. Dispositif de test (16) destiné à vérifier la fonctionnalité d'une unité de détection et d'imagerie (12), ledit dispositif de test comprenant :
une unité de traitement (18) ; et
une unité de projection (20),
l'unité de projection (20) étant conçue pour projeter un motif (28) ayant des propriétés définies dans une zone de travail (24), et
l'unité de traitement (18) étant conçue pour évaluer les données d'image détectées par l'unité de détection et d'imagerie (12), détecter le motif projeté dans les données d'image et extraire les propriétés spécifiques de celui-ci et comparer les propriétés spécifiques du motif projeté détecté aux propriétés définies,
**caractérisé en ce que**
la zone de travail (24) est divisée en un grand nombre de segments définis, et l'unité de projection (20) est conçue pour générer le motif au moins une fois dans chaque segment défini dans un intervalle de temps défini.

3. Dispositif de test selon la revendication 1 ou 2, l'unité de traitement (18) étant conçue pour transmettre les propriétés spécifiques du motif projeté détecté à une commande (14).

4. Système (10) destiné à réaliser une fonction de sécurité, notamment pour surveiller une zone de sécurité d'une installation technique, ledit système comprenant :
une unité de détection et d'imagerie (12) destinée à détecter un événement déclencheur de la fonction de sécurité dans une zone de travail définie (24),
une commande (14) destinée à exécuter une réaction liée à la sécurité en fonction de l'événement déclencheur, et
un dispositif de test (16) selon l'une des revendications 1 à 3.

5. Système selon la revendication 4, la commande (14) étant conçue pour effectuer la réaction liée à la sécurité en outre en fonction de la comparaison des propriétés spécifiques aux propriétés définies.

6. Système selon l'une des revendications 4 et 5, la commande (14) étant une commande de sécurité munie de dispositifs liés à la sécurité et étant seule conçue pour assurer une exécution à sécurité intégrée de la réaction liée à la sécurité.

7. Système selon la revendication 6, le dispositif de test (16) étant au moins partiellement intégré dans la commande de sécurité ou étant un module conçu pour cela, et au moins l'unité de traitement (18) utilisant les dispositifs liés à la sécurité pour assurer la sécurité intégrée de l'unité de traitement (18).

8. Système selon l'une des revendications 4 à 7, la commande (14) étant conçue pour déterminer les propriétés définies du motif (28).

9. Système ou dispositif de test selon l'une des revendications 1 à 8, les propriétés définies comprenant une information de position et l'unité de projection (20) étant conçue pour projeter le motif (28) en fonction de l'information de position dans la zone de travail (24).

10. Système ou dispositif de test selon l'une des revendications 1 à 9, la zone de travail (24) étant une zone de travail tridimensionnelle et le motif (28) ayant comme propriété définie une caractéristique tridimensionnelle qui peut être détectée par l'unité de détection et d'imagerie (12).

11. Système ou dispositif de test selon la revendication 10, la caractéristique tridimensionnelle évoluant de manière continue dans le temps.

12. Système ou dispositif de test selon l'une des revendications 1 à 11, le motif (28) étant un motif à points et l'unité de projection étant notamment un projecteur laser.

13. Système ou dispositif de test selon l'une des revendications 1 à 12, l'unité de détection et d'imagerie (12) étant une unité de caméra non sécurisée qui ne peut assurer de manière autonome une détection sans erreur.

14. Procédé (100) destiné à réaliser une fonction de sécurité, notamment pour surveiller une zone de sécurité d'une installation technique, ledit procédé comprenant les étapes suivantes :
- fournir une unité de détection et d'imagerie (12) destinée à détecter un événement déclencheur de la fonction de sécurité dans une zone de travail définie (24),
- fournir une commande (14) destinée à exécuter une réaction liée à la sécurité en fonction de l'événement déclencheur, et
- fournir un dispositif de test (16) qui comprend une unité de traitement (18) et une unité de projection (20), pour vérifier la fonctionnalité de l'unité de détection et d'imagerie (12),
l'unité de projection (20) projetant un motif (28) ayant des propriétés définies dans la zone de travail (24), et l'unité de traitement (18) évaluant des données d'image acquises par l'unité de détection et d'imagerie (12), détectant le motif projeté dans les données d'image, extrayant les propriétés spécifiques de celui-ci et comparant les propriétés spécifiques du motif projeté détecté aux propriétés définies,
**caractérisé en ce que**
le motif (28) est un motif dynamique dans lequel les propriétés définies changent de manière continue dans le temps de sorte que les propriétés définies changent de manière systématique dans un premier intervalle de temps et de manière aléatoire dans un deuxième intervalle de temps.

15. Procédé (100) destiné à réaliser une fonction de sécurité, notamment pour surveiller une zone de sécurité d'une installation technique, ledit procédé comprenant les étapes suivantes :
- fournir une unité de détection et d'imagerie (12) pour détecter un événement déclencheur de la fonction de sécurité dans une zone de travail définie (24),
- fournir une commande (14) destinée à exécuter une réaction liée à la sécurité en fonction de l'événement déclencheur, et
- fournir un dispositif de test (16), qui comprend une unité de traitement (18) et une unité de projection (20), pour vérifier la fonctionnalité de l'unité de détection et d'imagerie (12),
l'unité de projection (20) projetant un motif (28) ayant des propriétés définies dans la zone de travail (24), l'unité de traitement (18) évaluant des données d'image acquises par l'unité de détection et d'imagerie (12), détectant le motif projeté dans les données d'image, extrayant les propriétés spécifiques et comparant les propriétés spécifiques du motif projeté détecté aux propriétés définies,
**caractérisé en ce que**
la zone de travail (24) est divisée en un grand nombre de segments définis, et l'unité de projection (20) est conçue pour générer le motif au moins une fois dans chaque segment défini dans un intervalle de temps défini.
